# EUROPÄISCHE PATENTSCHRIFT

(11) **EP 1 394 513 B1**
(45) Veröffentlichungstag und Bekanntmachung des Hinweises auf die Patenterteilung: **05.10.2011**
(21) Anmeldenummer: 03008636.7
(22) Anmeldetag: 15.04.2003
(51) Int. Cl.: G01F 1/58

(54) **Magnetisch-induktives Durchflussmessgerät**
Magneto-inductive mass flow meter
Débitmètre magnéto-inductif

(30) Priorität: 27.08.2002 DE 10240024
(43) Veröffentlichungstag der Anmeldung: 03.03.2004
(73) Patentinhaber: Krohne AG, 4019 Basel (CH)
(72) Erfinder: Hofmann, Friedrich, 47638 Straelen (DE); van Willigen, Arnould L., 2901 Kc, Capelle a/d Ijssel (NL); Poortmann, Boudewijn Jozef, 3314 GD, Dordrecht (NL)
(74) Vertreter: Gesthuysen, von Rohr & Eggert

(56) Entgegenhaltungen:
- DE-A- 3 344 679
- DE-A- 4 139 915

## Beschreibung

Die Erfindung betrifft ein magnetisch-induktives Durchflußmeßgerät, zur Messung des Durchflusses eines strömenden Mediums, mit einer Meßleitung, einem durch die Wand der Meßleitung hindurchführenden Meßelektrodenkanal und einer Meßelektrode, wobei die Meßelektrode in dem Meßelektrodenkanal derart angeordnet ist, daß ihr Meßelektrodenkopf gegenüber der Innenwand der Meßleitung zurückgezogen ist.

Magnetisch-induktive Durchflußmeßgeräte sind grundsätzlich schon seit längerer Zeit gut bekannt und werden vielfältig in unterschiedlichen Einsatzgebieten verwendet. Das grundlegende Prinzip eines magnetisch-induktiven Durchflußmeßgeräts für strömende Medien geht dabei bereits auf Faraday zurück, der im Jahre 1832 vorgeschlagen hat, das Prinzip der elektrodynamischen Induktion zur Strömungsgeschwindigkeitsmessung anzuwenden. Nach dem Faradayschen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faradaysche Induktionsgesetz wird bei einem magnetisch-induktiven Durchflußmeßgerät dadurch ausgenutzt, daß ein Magnet, im allgemeinen bestehend aus zwei Magnetspulen, ein Magnetfeld senkrecht zur Strömungsrichtung in dem Meßrohr erzeugt. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung. Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist schließlich die Proportionalität zwischen der Meßspannung und der über den Querschnitt des Meßrohrs gemittelten Strömungsgeschwindigkeit des Mediums, d. h. zwischen Meßspannung und Volumenstrom.

Ein magnetisch-induktives Durchflußmeßgerät, wie eingangs beschrieben, ist z. B. aus der WO 85/04954 bekannt. Bei diesem magnetisch-induktiven Durchflußmeßgerät ist der Raum des Meßelektrodenkanals vor dem Meßelektrodenkopf bis zum Innenraum der Meßleitung mit einer Kappe aus porösem keramischen Werkstoff, aus Glasfritte oder aus porösem Kunststoff versehen. Auf diese Weise soll dafür Sorge getragen werden, daß eine Verschmutzung oder Beeinträchtigung der Oberfläche des Meßelektrodenkopfes oder eine Beeinträchtigung der Meßergebnisse durch Feststoffteilchen unterbunden wird, die vom strömenden Medium mitgeführt werden. Dies wird dadurch erreicht, daß die Oberfläche des Meßelektrodenkopfes geschützt unter der porösen Kappe liegt, in die allerdings das flüssige Medium eindringen kann, so daß es zu einer galvanisch leitenden Verbindung zwischen dem strömenden Medium einerseits und der Meßelektrode andererseits kommt. Die Kappe selbst ist mit ihrer Oberfläche fluchtend zur Innenwand der Meßleitung angeordnet, so daß sie gegenüber dem strömenden Medium geschützt ist und auch von dem Medium mitgerissene harte Feststoffteilchen keinen Abrieb verursachen können. Somit ist also die Porösität der Kappe in dem Raum des Meßelektrodenkanals vor dem Meßelektrodenkopf derart zu wählen, daß sie einerseits flüssigkeitsdurchlässig ist, andererseits jedoch etwaige Feststoffteilchen des Mediums nicht zur Oberfläche des Meßelektrodenkopfes durchdringen können.

Trotz dieser aus der WO 85/04954 bzw. anderer aus dem Stand der Technik bekannter Lösungen weist ein an der Meßelektrode abgegriffenes Spannungssignal insbesondere dann immer noch einen erheblichen Rauschanteil auf, wenn das durch die Meßleitung strömende Medium einen sehr hohen Anteil an festen Bestandteilen, wie Sandkörnern usw., aufweist. Dieses Problem wird zwar bei dem eingangs beschriebenen magnetisch-induktiven Durchflußmeßgerät dadurch verringert, daß der Meßelektrodenkopf der Meßelektrode gegenüber der Innenwand der Meßleitung zurückgezogen ist. Aufgrund der den Raum des Meßelektrodenkanals vor dem Meßelektrodenkopf ausfüllenden Kappe aus einem porösen Material, wie einer porösen Keramik, kann allerdings nur ein geringes Signal an der Meßelektrode abgegriffen werden, was dem Signal-zu-Rausch-Verhältnis wiederum abträglich ist.

Dementsprechend ist es die Aufgabe der Erfindung, ein solches magnetisch-induktives Durchflußmeßgerät anzugeben, das auch bei mit festen Bestandteilen durchsetztem, die Meßleitung durchfließenden Medium ein gutes Signal-zu-Rausch-Verhältnis zeigt.

Das Dokument DE3344679A offenbart ein Magnetisch -induktives Durchflußmeßgerät, zur Messung des Durchflusses eines strömenden Mediums, mit einer Meßleitung, einem durch die Wand der Meßleitung hindurchführenden Meßelektrodenkanal und einer Meßelektrode, wobei die Meßelektrode in dem Meßelektrodenkanal derart angeordnet ist, daß ihr Meßelektrodenkopf gegenüber der Innenwand der Meßleitung etwas zurückgesetzt ist, wobei der Raum des Meßelektrodenkanals vor dem Meßelektrodenkopf bis zum Innenraum der Meßleitung frei ist.

Die zuvor hergeleitete und aufgezeigte Aufgabe ist ausgehend von dem eingangs beschriebenen magnetisch-induktiven Durchflußmeßgerät dadurch gelöst, daß der Raum des Meßelektrodenkanals vor dem Meßelektrodenkopf bis zum Innenraum der Meßleitung frei ist, wobei der Meßelektrodenkopf gegenüber der Innenwand der Messleitung um ein solches Maß zurückgezogen ist, das im wesentlichen dem doppelten Durchmesser des Meßelektrodenkanals entpricht.

Erfindungsgemäß ist also vorgesehen, daß der Raum vor dem Meßelektrodenkopf im wesentlichen ohne Einsätze oder Einbauten ist und unmittelbar in den Innenraum der Meßleitung übergeht. Bei einem solchen im wesentlichen vollständig freien Raum vor dem Meßelektrodenkopf kann das strömende Medium grundsätzlich über den gesamten Querschnitt des Meßelektrodenkanals bzw. des Meßelektrodenkopfes in direkten Kontakt mit der Oberfläche des Meßelektrodenkopfes treten. Damit wird eine sehr gute galvanisch leitende Verbindung zwischen dem die Meßleitung durchströmenden Medium einerseits und der Meßelektrode andererseits hergestellt. Dadurch, daß der Meßelektrodenkopf gegenüber der Innenwand der Meßleitung zurückgezogen ist, wird jedoch ein Auftreffen von von dem Medium mitgeführten festen Bestandteilen mit der in der Meßleitung herrschenden Durchflußgeschwindigkeit auf die Oberfläche des Meßelektrodenkopfes vermieden. Im Ergebnis liegt der Erfindung also die Erkenntnis zugrunde, daß ein vollständig offener Raum im Meßelektrodenkanal vor dem gegenüber der Innenwand der Meßleitung zurückgezogenen Meßelektrodenkopf insgesamt ein besseres Signal-zu-Rausch-Verhältnis liefert, als eine Abdeckung des zurückgezogenen Meßelektrodenkopfes mit einer porösen Keramik, die zwar ein Auftreffen von in dem Medium mitgeführten festen Bestandteilen auf die Oberfläche des Meßelektrodenkopfes praktisch vollständig verhindert, allerdings auch nur einen galvanisch leitenden Kontakt des Mediums mit der Oberfläche des Meßelektrodenkopfes in wesentlich geringerem Maße zuläßt.

Schon ein geringes Zurückziehen des Meßelektrodenkopfes gegenüber der Innenwand der Meßleitung führt zu einem deutlich verbesserten Signal-zu-Rausch-Verhältnis. Es hat sich jedoch gezeigt, daß sich ein nahezu optimales Signal-zu-Rausch-Verhältnis dann erzielen läßt, wenn der Meßelektrodenkopf gegenüber der Innenwand der Meßleitung um ein solches Maß zurückgezogen ist, das im wesentlichen dem doppelten Durchmesser des Meßelektrodenkanals entspricht.

Grundsätzlich kann die Meßleitung in Form eines Meßrohrs aus einem elektrisch isolierenden Material, wie einem Kunststoff, vorliegen. Gemäß einer bevorzugten Weiterbildung der Erfindung ist jedoch vorgesehen, daß die Meßleitung ein Meßrohr mit einer elektrisch isolierenden Innenverkleidung aufweist und der Meßelektrodenkopf gegenüber der Innenwand der Innenverkleidung zurückgezogen ist. In diesem Fall stellt also die Innenwand der Innenverkleidung die Innenwand der Meßleitung dar. Dabei ist gemäß einer bevorzugten Weiterbildung der Erfindung ferner vorgesehen, daß der Meßelektrodenkopf gegenüber der Innenwand der Innenverkleidung um ein der Dicke der Innenverkleidung entsprechendes Maß zurückgezogen ist. Dies entspricht einer solchen Anordnung der Meßelektrode in dem Meßelektrodenkanal, bei der der Meßelektrodenkopf bei Fehlen der Innenverkleidung bündig mit der Innenwand des Meßrohrs abschließt.

Bei Vorsehen einer elektrisch isolierenden Innenverkleidung auf der Innenwand des Meßrohrs kann gemäß einer bevorzugten Weiterbildung der Erfindung ferner vorgesehen sein, daß die Innenverkleidung in den Meßelektrodenkanal hineinreicht, so daß die Innenwandung des Meßelektrodenkanals wenigstens teilweise mit der Innenverkleidung bedeckt ist. Damit ist die Meßelektrode gegenüber dem Meßrohr durch die Innenverkleidung auf der Innenwandung des Meßelektrodenkanals elektrisch isoliert.

Bei einem erfindungsgemäßen magnetisch-induktiven Durchflußmeßgerät, das ein Meßrohr mit einer elektrisch isolierenden Innenverkleidung aufweist, ist erfindungsgemäß folgendes Verfahren zur Feststellung des Abtrags der Innenverkleidung möglich: An der Meßelektrode wird ein Spannungssignal abgegriffen. Dieses Spannungssignal wird nicht nur zur Durchflußmessung verwendet, sondern darüber hinaus wird das Rauschen des an der Meßelektrode abgegriffenen Spannungssignals bestimmt und mit einem Referenzwert verglichen. Wenn das Rauschen des an der Meßelektrode abgegriffenen Spannungssignals den Referenzwert übersteigt, wird ein derartiges Signal erzeugt und ausgegeben, das auf einen fortgeschrittenen Abtrag der Innenverkleidung des Meßrohrs hinweist. Bei entsprechender Wahl des Referenzwertes kann einem Verwender des gemäß diesem Verfahren betriebenen magnetisch-induktiven Durchflußmeßgeräts signalisiert werden, daß die Innenverkleidung des Meßrohrs in Kürze zu ersetzen ist. Bei dem Referenzwert, mit dem das Rauschen des an der Meßelektrode abgegriffenen Spannungssignals verglichen wird, kann es sich einerseits um einen festen, absoluten Betrag handeln, es kann andererseits jedoch auch ein relativer Wert vorgesehen sein, der z. B. in Abhängigkeit von einem Anfangswert bestimmt wird, der bei Inbetriebnahme des magnetisch-induktiven Durchflußmeßgeräts mit einer vollständig neuen Innenverkleidung gemessen worden ist.

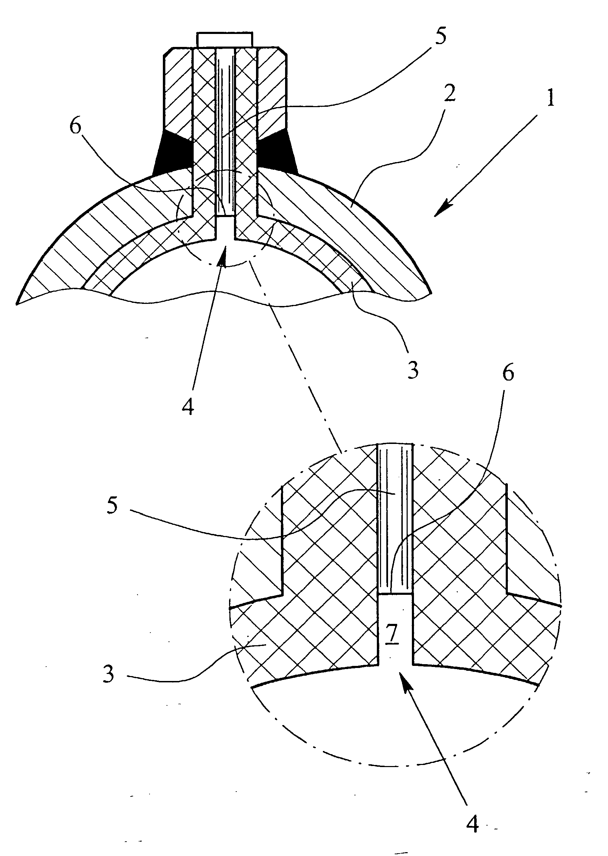

Im einzelnen gibt es nun eine Vielzahl von Möglichkeiten, das erfindungsgemäße magnetisch-induktive Durchflußmeßgerät auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt die einzige Figur die Anordnung einer Meßelektrode gemäß einem bevorzugten Ausführungsbeispiel der Erfindung, schematisch im Schnitt, einschließlich einer Ausschnittsvergrößerung, aus der das Maß ersichtlich ist, um das die Meßelektrode gegenüber der Innenwand der Meßleitung zurückgezogen ist. Für das Verständnis der Erfindung unwesentliche Bestandteile des magnetisch-induktiven Durchflußmeßgeräts sind bei der Darstellung in der Figur weggelassen worden.

Das magnetisch-induktive Durchflußmeßgerät gemäß dem bevorzugten Ausführungsbeispiel der Erfindung weist eine Meßleitung 1 auf, die aus einem Meßrohr 2 mit einer elektrisch isolierenden Innenverkleidung 3 besteht. In der Wand der Meßleitung 1 ist ein Meßelektrodenkanal 4 vorgesehen. Mit nicht weiter dargestellten Magnetspulen wird ein Magnetfeld erzeugt, so daß in dem durch die Meßleitung 1 strömenden Medium eine elektrische Spannung induziert wird. Zum Abgreifen dieser in dem Medium induzierten Spannung dienen zwei einander gegenüberliegenden Meßelektroden, von denen nur eine Meßelektrode 5 dargestellt ist. Die Meßelektrode 5 ist derart in dem Meßelektrodenkanal 4 angeordnet, daß ihr Meßelektrodenkopf 6 gegenüber der Innenwand der Meßleitung 1, also der Innenwand der Innenverkleidung 3, zurückgezogen ist. Damit verbleibt ein Raum 7 des Meßelektrodenkanals 4 vor dem Meßelektrodenkopf 6. Dieser Raum 7 ist vollständig frei, also weder gefüllt noch mit einer Kappe oder einer Deckelung versehen, so daß das durch die Meßleitung 1 strömende Medium über den gesamten Querschnitt des Meßelektrodenkanals 4 mit dem Meßelektrodenkopf 6 in Kontakt kommen kann.

Wie insbesondere aus der Ausschnittsvergrößerung ersichtlich, ist der Meßelektrodenkopf 6 gegenüber der Innenwand der Innenverkleidung 3 um ein solches Maß zurückgezogen, das dem doppelten Durchmesser des Meßelektrodenkanals 4 entspricht. Mit einer solchen Anordnung der Meßelektrode 5 im Meßelektrodenkanal 4 läßt sich ein nahezu optimales Signal-zu-Rausch-Verhältnis erzielen.

Wie aus der Figur ersichtlich, gilt ferner, daß der Meßelektrodenkopf 6 gegenüber der Innenwand der Innenverkleidung 3 im wesentlichen um ein der Dicke der Innenverkleidung 3 entsprechendes Maß zurückgezogen ist. Außerdem reicht die Innenverkleidung 3 in den Meßelektrodenkanal 4 hinein, so daß die Innenwandung des Meßelektrodenkanals 4 wenigstens teilweise mit der Innenverkleidung 3 bedeckt ist, wodurch eine elektrische Isolierung zwischen dem Meßrohr 2 einerseits und der Meßelektrode 5 andererseits erzielt wird.

Bei der insgesamt aus der Figur ersichtlichen Anordnung ist ein solches Verfahren zur Feststellung des Abtrags der Innenverkleidung 3 des Meßrohrs 2 möglich, bei dem der Rauschanteil des an der Meßelektrode 5 abgegriffenen Spannungssignals bestimmt und mit einem vorbestimmten festen Referenzwert verglichen wird. Wenn der Rauschanteil des an der Meßelektrode 5 abgegriffenen Spannungssignals den Referenzwert übersteigt, wird ein solches Signal erzeugt und ausgegeben, das einem Verwender des magnetisch-induktiven Durchflußmeßgeräts gemäß dem bevorzugten Ausführungsbeispiel der Erfindung auf einen fortgeschrittenen Abtrag der Innenverkleidung 3 des Meßrohrs 2 hinweist. Dem Verwender wird somit signalisiert, daß die Innenverkleidung 3 ganz in Kürze zu erneuern ist.

## Patentansprüche

1. Magnetisch-induktives Durchflußmeßgerät, zur Messung des Durchflusses eines strömenden Mediums, mit einer Meßleitung (1), einem durch die Wand der Meßleitung (1) hindurchführenden Meßelektrodenkanal (4) und einer Meßelektrode (5), wobei die Meßelektrode (5) in dem Meßelektrodenkanal (4) derart angeordnet ist, daß ihr Meßelektrodenkopf (6) gegenüber der Innenwand der Meßleitung (1) zurückgezogen ist, und der Raum (7) des Meßelektrodenkanals (4) vor dem Meßelektrodenkopf (6) bis zum Innenraum der Meßleitung (1) frei ist, **dadurch gekennzeichnet, daß** der Meßelektrodenkopf (6) gegenüber der Innenwand der Meßleitung (1) um ein solches Maß zurückgezogen ist, das im wesentlichen dem doppelten Durchmesser des Meßelektrodenkanals (4) entspricht.

2. Magnetisch-induktives Durchflußmeßgerät nach Anspruch 1, **dadurch gekennzeichnet, daß** die Meßleitung (1) ein Meßrohr (2) mit einer elektrisch isolierenden Innenverkleidung (3) aufweist und der Meßelektrodenkopf (6) gegenüber der Innenwand der Innenverkleidung (3) zurückgezogen ist.

3. Magnetisch-induktives Durchflußmeßgerät nach Anspruch 2, **dadurch gekennzeichnet, daß** der Meßelektrodenkopf (6) gegenüber der Innenwand der Innenverkleidung (3) um ein der Dicke der Innenverkleidung (3) entsprechendes Maß zurückgezogen ist.

4. Magnetisch-induktives Durchflußmeßgerät nach Anspruch 2 oder 3, **dadurch gekennzeichnet, daß** die Innenverkleidung (3) in den Meßelektrodenkanal (4) hineinreicht, so daß die Innenwandung des Meßelektrodenkanals (4) wenigstens teilweise mit der Innenverkleidung (3) bedeckt ist.

5. Verfahren zur Feststellung des Abtrags einer Innenverkleidung (3) eines Meßrohrs (2) eines magnetisch-induktiven Durchflußmeßgeräts, mit dem der Durchfluß eines durch das mit der Innenverkleidung (3) versehene Meßrohr (2) strömenden Mediums gemessen wird und das eine durch die Wand des Meßrohrs (2) und durch die Innenverkleidung (3) hindurchführenden Meßelektrodenkanal (4) sowie eine Meßelektrode (5) aufweist, die in dem Meßelektrodenkanal (4) derart angeordnet ist, daß ihr Meßelektrodenkopf (6) gegenüber der Innenwand der Innenverkleidung (3) um ein solche Maß zurückgezogen ist, das im das im wesenflichen dem dopplellen Durchmesser des Meßelektrodenkanals entspricht, und der Raum (7) des Meßelektrodenkanals (4) vor dem Meßelektrodenkopf (6) bis zum Innenraum des mit der Innenverkleidung (3) ausgekleideten Meßrohrs (2) frei ist, wobei an der Meßelektrode (5) ein Spannungssignal abgegriffen wird, das Rauschen des an der Meßelektrode (5) abgegriffenen Spannungssignals bestimmt und mit einem Referenzwert verglichen wird und wenn das Rauschen des an der Meßelektrode (5) abgegriffenen Spannungssignals den Referenzwert übersteigt,
ein Signal erzeugt und ausgegeben wird, das auf einen fortgeschrittenen Abtrag der Innenverkleidung (3) des Meßrohrs (2) hinweist.

## Claims

1. A magneto-inductive flowmeter for measuring the flow rate of a flowing medium, with a measuring conduit (1), a sampling-electrode channel (4) that extends through the wall of the measuring conduit (1), and a sampling electrode (5), the sampling electrode (5) being so positioned in the sampling-electrode channel (4) that its electrode head (6) is recessed from the inner wall of the measuring conduit (1) and there is a free space (7) of the sampling-electrode channel (4) located in front of the sampling-electrode head (6) extending up to the interior of the measuring conduit (1) **characterized in that** the sampling-electrode head (6) is recessed from the inner wall of the measuring conduit (1) by a distance corresponding essentially to twice the diameter of the sampling-electrode channel (4).

2. Magneto-inductive flowmeter according to claim 1, **characterized in that** the measuring conduit (1) comprises a measuring tube (2) provided with an electrically insulating internal liner (3) and that the sampling-electrode head (6) is recessed from the inner wall of the internal liner (3).

3. Magneto-inductive flowmeter according to claim 2, **characterized in that** the sampling-electrode head (6) is recessed from the inner wall of the internal liner (3) by a distance corresponding to the thickness of the internal liner (3),

4. Magneto-inductive flowmeter according to claim 2 or 3, **characterized in that** the internal liner (3) extends into the sampling-electrode channel (4) in such fashion as to cover at least part of the inner wall of the sampling-electrode channel (4) with the internal liner (3).

5. Method for determining the erosion of the internal liner (3) in the measuring tube (2) of a magneto-inductive flowmeter for measuring the flow rate of a medium flowing through the measuring tube (2) equipped with an internal liner (3) and that is provided with a sampling-electrode channel (4) extending through the wall of the measuring tube (2) and through the internal liner (3) and having a sampling electrode (5) that is so positioned in the sampling-electrode channel (4) so that its sampling-electrode head (6) is recessed from the inner wall of the internal liner by a distance that corresponds to essentially twice the diameter of the sampling-electrode channel and there is a free space (7) of the sampling-electrode channel (4) located in front of the sampling-electrode head (6) extending up to the interior of the measuring tube (2) equipped with an internal liner (3), wherein a voltage signal is collected at the sampling electrode (5), and for the noise component of the voltage signal collected at the sampling electrode (5) to be determined and compared against a reference value whereby, when said noise component of the voltage signal collected at the sampling electrode (5) exceeds said reference value, a signal is generated and transmitted that indicates an advanced state of erosion of the internal liner (3) in the measuring tube (2).

## Revendications

1. Débitmètre magnéto-inductif destiné à mesurer le débit d'un fluide en circulation, comprenant une conduite de mesure (1), un canal d'électrode de mesure (4) qui mène à travers la paroi de la conduite de mesure (1) et une électrode de mesure (5), l'électrode de mesure (5) étant disposée dans le canal d'électrode de mesure (4) de telle sorte que sa tête d'électrode de mesure (6) est en retrait par rapport à la paroi intérieure de la conduite de mesure (1) et l'espace (7) du canal d'électrode de mesure (4) devant la tête d'électrode de mesure (6) est libre jusqu'à l'espace intérieur de la conduite de mesure (1), **caractérisé en ce que** la tête d'électrode de mesure (6) est en retrait par rapport à la paroi intérieure de la conduite de mesure (1) d'une cote qui correspond pour l'essentiel au double du diamètre du canal d'électrode de mesure (4).

2. Débitmètre magnéto-inductif selon la revendication 1, **caractérisé en ce que** la conduite de mesure (1) présente un tube de mesure (2) avec un habillage intérieur (3) électriquement isolant et la tête d'électrode de mesure (6) est en retrait par rapport à la paroi intérieure de l'habillage intérieur (3).

3. Débitmètre magnéto-inductif selon la revendication 2, **caractérisé en ce que** la tête d'électrode de mesure (6) est en retrait par rapport à la paroi intérieure de l'habillage intérieur (3) d'une cote correspondant à l'épaisseur de l'habillage intérieur (3).

4. Débitmètre magnéto-inductif selon la revendication 2 ou 3, **caractérisé en ce que** l'habillage intérieur (3) pénètre dans le canal d'électrode de mesure (4), de sorte que la paroi intérieure du canal d'électrode de mesure (4) est au moins partiellement recouvert par l'habillage intérieur (3).

5. Procédé pour déterminer l'enlèvement d'un habillage intérieur (3) d'un tube de mesure (2) d'un débitmètre magnéto-inductif avec lequel est mesuré le débit d'un fluide en circulation à travers le tube de mesure (2) doté de l'habillage intérieur (3) et qui présente un canal d'électrode de mesure (4) qui mène à travers la paroi du tube de mesure (2) et à travers l'habillage intérieur (3) ainsi qu'une électrode de mesure (5) qui est disposée dans le canal d'électrode de mesure (4) de telle sorte que sa tête d'électrode de mesure (6) est en retrait par rapport à la paroi intérieure de l'habillage intérieur (3) d'une cote qui correspond pour l'essentiel au double du diamètre du canal d'électrode de mesure et l'espace (7) du canal d'électrode de mesure (4) devant la tête d'électrode de mesure (6) est libre jusqu'à l'espace intérieur du tube de mesure (2) revêtu de l'habillage intérieur (3), un signal de tension étant prélevé sur l'électrode de mesure (5), le bruit du signal de tension prélevé sur l'électrode de mesure (5) étant déterminé et comparé avec une valeur de référence et, lorsque le bruit du signal de tension prélevé sur l'électrode de mesure (5) est supérieur à la valeur de référence, un signal étant généré et délivré, qui avertit d'un enlèvement avancé de l'habillage intérieur (3) du tube de mesure (2).
